# EUROPEAN PATENT APPLICATION

(11) **EP 1 127 602 A2**
(43) Date of publication of application: **29.08.2001**
(21) Application number: 01301389.1
(22) Date of filing: 16.02.2001
(51) Int. Cl.: B01D 27/08

(54) **Multi-configurable cartridge filter base and manufacturing method thereofA**

(30) Priority: 17.02.2000 US 183194 P
(71) Applicant: STANADYNE AUTOMOTIVE CORP., Windsor Connecticut 06095 (US)
(72) Inventor: Janik, Leon P., Suffield, Connecticut 06078 (US); Williams, Michael J.,, Glastobury, Connecticut 06033, (US); Tornatore, Thomas M.,, Enfield, Connecticut 06082, (US)
(74) Representative: Piésold, Alexander J.

(57) **Abstract**

A base module (10) for a filter assembly constructed from molded parts comprises a body (36, 36') which forms a receiving cavity for a replaceable filter cartridge (12) and a communication module (16, 16', 16") which includes integral inlet (18, 18') and outlet (20, 20') structures for providing fluid communication with the received filter cartridge (12) and inlet (26, 26') and outlet (28, 28') fittings for remote fluid communication. The body (36, 36'), communication module (16, 16', 16") and inlet and outlet fittings (26, 26', 28, 28') may be individually molded of plastic or similar material to provide for the efficient assembly of a set of elementary components into a base module having a configuration specified from an infinite variety of possible angular orientations.

## Description

This invention relates generally to fuel filter systems for internal combustion engines. More particularly, this invention relates to a filter assembly for a fuel filter system which employs a replaceable cartridge mountable to a base module and to techniques for manufacturing the base module.

In fuel filter systems to which the invention relates, such as those disclosed in U.S. Patent Nos. 5,203,994, 5,302,284 and 5,766,463, a disposable filter cartridge is mounted to a base in such a way that it can be relatively easily removed at pre-established intervals for replacement purposes. The base typically has a pair of coaxial central conduits which provide the fuel inlet and outlet to the filter cartridge. The cartridge may contain a single or multiple stage filter configuration for filtering the fuel. In numerous embodiments the replaceable filter cartridge is suspended below the base, but other orientations are commonly employed. The base is mounted to the vehicle in any of a number of locations depending on the particular application and spatial constraints. The base typically also includes inlet and outlet connectors which may be in the form of posts or other structures which mount fittings to connect input and output lines to the base.

In one well-known conventional construction, a retainer ring is threaded to the base and engages a circumferential roll seam shoulder of the filter cartridge to retain the cartridge to the base. The retainer ring may alternately include a ramp-like structure which mates with a complementary ramp of the base and the cartridge and/or retainer ring is springloaded to facilitate retention of the cartridge to the base. The cartridge typically includes sealing grommets or other sealing structures to seal the cartridge with the inlet and outlet conduits of the base. It should be appreciated that base structures for replaceable filter cartridges may assume a wide variety of configurations as well as spatial orientations.

The fuel filter is typically mounted in the engine compartment and may be subject to a number of dimensional and headroom constraints depending on the particular vehicle for which the filter assembly is employed. The'placement and angular orientation of the inlet and outlet connectors or fittings are often critical for meeting the headroom and optimum system constraints of the application.

Viewed from one aspect the present invention provides a base module for a filter assembly including a body defining a receptacle for receiving a filter cartridge and including a retaining lip which engages a roll seam structure on the filter cartridge to retain the cartridge in mated position with the base module, at least one mounting bracket extending from said body for mounting said base module to a vehicle, said base module further providing fluid passageways for delivering fluid to the filter cartridge and transmitting filtered fluid from the filter assembly, characterized in that:
the body includes a central axial opening and fluid passageways for transmitting fluid to and from the base module are provided on a separately molded communication module including an inlet conduit extending into said receptacle,
wherein said communication module is receivable in said opening at a plurality of angular orientations to said body and fixable to said body.

In a preferred form the inventin provides a novel base module for receiving a filter cartridge in a filter assembly such as a fuel filter assembly. Preferably, the base module is assembled from molded components which may be formed from plastic, glass filled nylon or other such materials. The base module defines a receptacle for receiving a filter cartridge and comprises a centrally disposed communication module, a body having a central opening for receiving the communication module and inlet and outlet fittings. The base module provides fluid access to a received filter cartridge through integrally molded inlet and outlet conduits that respectively communicate with inlet and outlet fluid passages. The body includes at least one molded mounting bracket, an axially projecting cylindrical wall, which surrounds a receptacle for receiving the filter cartridge and a lip structure for retaining the received cartridge. Inlet and outlet fittings fluidly communicate with inlet and outlet fluid passages, respectively, and provide attachment locations for fluid lines communicating with the base module.

In one preferred embodiment, the communication module has integral inlet and outlet fittings having fixed angular orientations to the communication module and to each other. An axial inlet conduit and a coaxial annular skirt axially project toward the receptacle defined by the body. In this embodiment, the body includes an integrally molded outlet conduit projecting into the receptacle. An annular lip surrounds the central opening in the body and projects axially away from the receptacle. The communication module is received in the body central opening with the communication module skirt closely surrounding the body lip, forming an annular joint.

In an alternative preferred embodiment, the communication module includes a radially projecting support plate, inlet and outlet conduits and inlet and outlet connectors. The inlet and outlet conduits project into the receptacle defined by the body while the inlet and outlet connectors project axially away from the receptacle. The body receives the communication module in its central opening and has an annular structure which mates with the support plate of the communication module. In this embodiment, the inlet and outlet fittings are separately molded components adapted to surround and mate closely with the inlet and outlet connectors, respectively. This structure allows the inlet and outlet fittings to be individually positioned with respect to the communication module and to each other.

Viewed from another aspect, the invention provides a method for manufacturing a base module for a filter cartridge, said base module having inlet and outlet fittings defining fluid passageways toward and away from the base module, characterized in that the method includes the following steps:
a) providing a communication module;
b) providing a body adapted to receive and mate with the communication module in a plurality of angular orientations to said communication module;
c) mating said communication module to said body at an angular orientation selected from said plurality of angular orientations; and
d) joining said communication module to said body.

During manufacture, the separate components may be selectively positioned individually for a given application. The components are then preferably sonically welded in place or otherwise joined to form base modules with one of an infinite variety of possible angular configurations between the body, the communication module and the inlet and outlet fittings.

Some preferred embodiments of the invention will now be described by way of example and with reference to the following drawings:
Figure 1 is an elevational view illustrating a filter assembly incorporating a multi-configurable filter base module in accordance with one aspect of the present invention together with a filter cartridge;
Figure 2 is a top schematic view illustrating various configurations for the inlet and outlet conduits of the multi-configurable filter base module of Figure 1 ;
Figure 3 is a perspective view illustrating a filter assembly with inlet and outlet fittings in a 90° angle configuration;
Figure 4 is a perspective view illustrating a filter assembly with inlet and outlet fittings in a 180° angle configuration;
Figure 5 is a central sectional view of a multi-configurable filter base module and a portion of a received filter cartridge in accordance with the present invention;
Figure 6 is a central sectional view of a multi-configurable filter base module and a portion of a received filter cartridge for a second embodiment of the multi-configurable base module of the present invention;
Figure 7 is a perspective view of an alternative embodiment of a multi-configurable filter base module together with inlet and outlet lines (partially illustrated) and a filter cartridge;
Figure 8 is a central sectional view (partly in phantom) of a multi-configurable filter base module and a portion of a received filter cartridge for a third embodiment of the multi-configurable base module of the present invention;
Figure 9 is a central sectional view of a base module body for use in conjunction with the multi-configurable filter base module of Figure 8;
Figure 10 is a central sectional view of a communication module for use in conjunction with the multi-configurable filter base module of Figure 8;
Figure 11 is an elevational view of a filter assembly incorporating the multi-configurable filter base module of Figure 8 together with a filter cartridge;
Figure 12 is a perspective view illustrating the filter assembly of Figure 11 incorporating a communication module having inlet and outlet fittings in a 90° configuration;
Figure 13 is a perspective view illustrating the filter assembly of Figure 11 incorporating a communication module having inlet and outlet fittings in a 180° configuration; and
Figure 14 is a central sectional view of an alternative communication module for use in conjunction with the base module body of Figure 9.

With reference to the drawings wherein like numerals represent like parts throughout the figures, filter base modules for a fuel filter system constructed in accordance with the present invention are designated by the numerals 10 and 10'. Each filter base module 10, 10' preferably receives a disposable filter cartridge 12 forming a filter assembly. The base module mounts to a vehicle at a location and in an orientation dictated by spatial constraints and vehicle specifications. The base module provides a junction for receiving fuel to be filtered and for transmitting filtered fuel to the fuel supply system (not illustrated).

Although numerous applications are possible, the fuel filter assembly is especially adapted for incorporation into the fuel supply system of an internal combustion engine (not illustrated), such as a diesel engine, for removing particulate matter from the fuel and/or for separating water from the fuel. For the illustrated embodiments, the disposable filter cartridge 12 is suspended from the base module 10, 10' although the base module also has ready applicability to other mounting orientations. In a preferred form the base module 10, 10' is substantially manufactured from molded components composed of plastic, glass filled nylon or the like. One preferred composition material is 33% glass filled nylon.

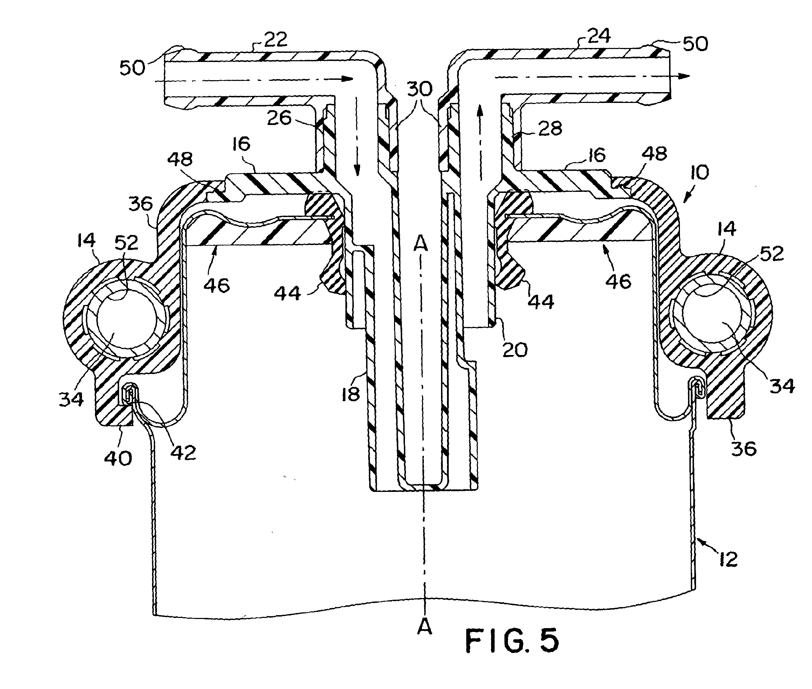

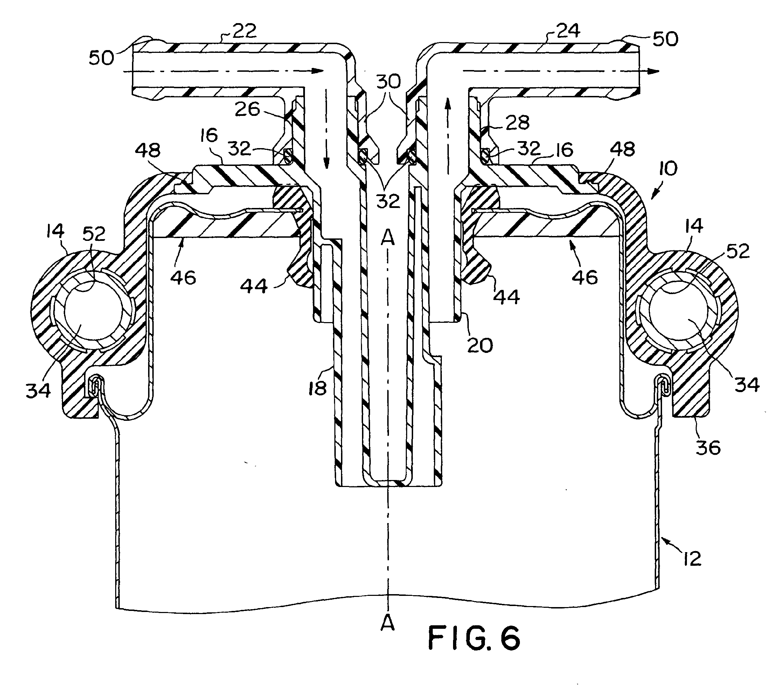

As illustrated in Figures 5 and 6, a preferred embodiment of the base module 10 is assembled from four molded components: a body 36, a communication module 16, an inlet fitting 22 and an outlet fitting 24. The body 36 forms the outer cylinder-shaped portion of the base module 10. The body 36 surrounds and is integrally joined to the communication module 16 to form a structure adapted for receiving and mating with a replaceable filter cartridge 12. The cylindrical wall of the body 36 is symmetric about a central axis A through the communication module 16 and surrounds a receptacle for receiving a filter cartridge 12. The body 36 terminates in a retaining lip 40 which engages a roll seam structure 42 on the filter cartridge 12, retaining the filter cartridge 12 in a stable relationship with the base module 10.

The communication module 16, is a molded structure that occupies the central portion of the base module 10. The communication module comprises a support plate that mates with the body 36. Integrally molded coaxial inlet 18 and outlet 20 conduits extend along axis A into the receptacle defined by the body 36. Inlet 26 and outlet 28 connectors communicate with corresponding inlet 18 and outlet 20 conduits and extend along axis A in an opposite direction from the inlet 18 and outlet 20 conduits. Molded inlet 22 and outlet 24 fittings, which are typically L-shaped members, have enlarged throats 30 at one end which fit closely over the inlet 26 and outlet 28 connectors. In an alternate configuration illustrated in Figure 6, sealing rings 32 are positioned between the inlet 26 and outlet 28 connectors and the enlarged throat areas 30 of inlet 22 and outlet 24 fittings. The fittings 22 and 24 may have circular ridge surfaces 50 at their opposite ends to facilitate connection with various line fittings (not illustrated).

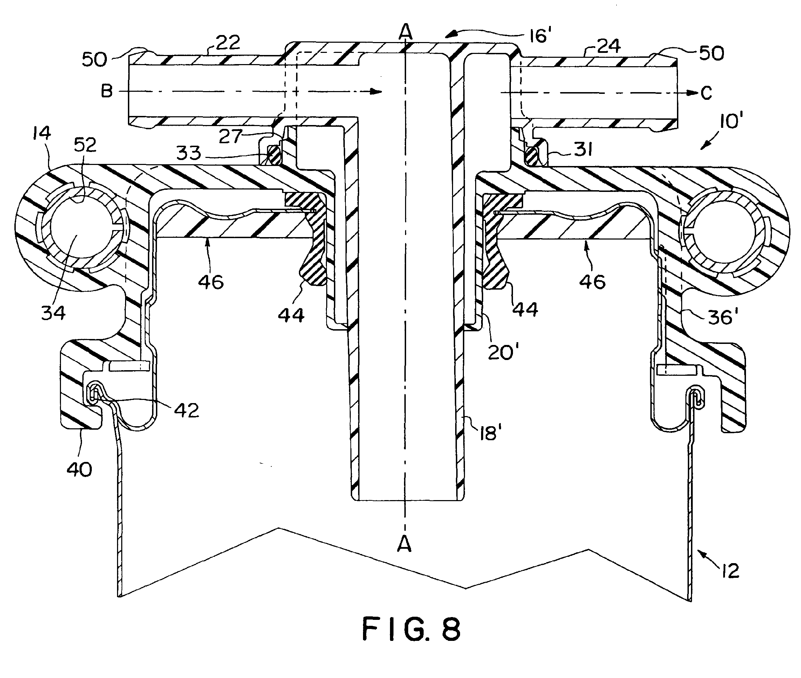

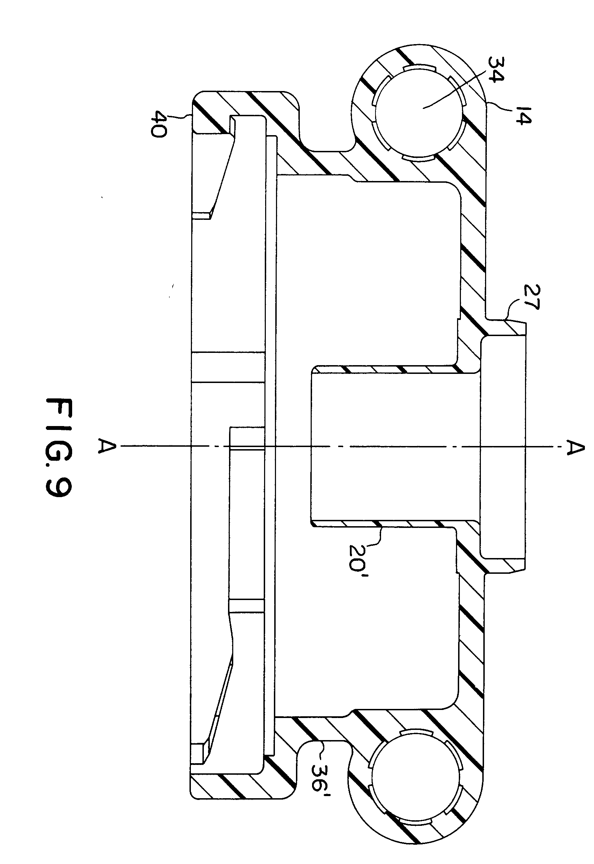

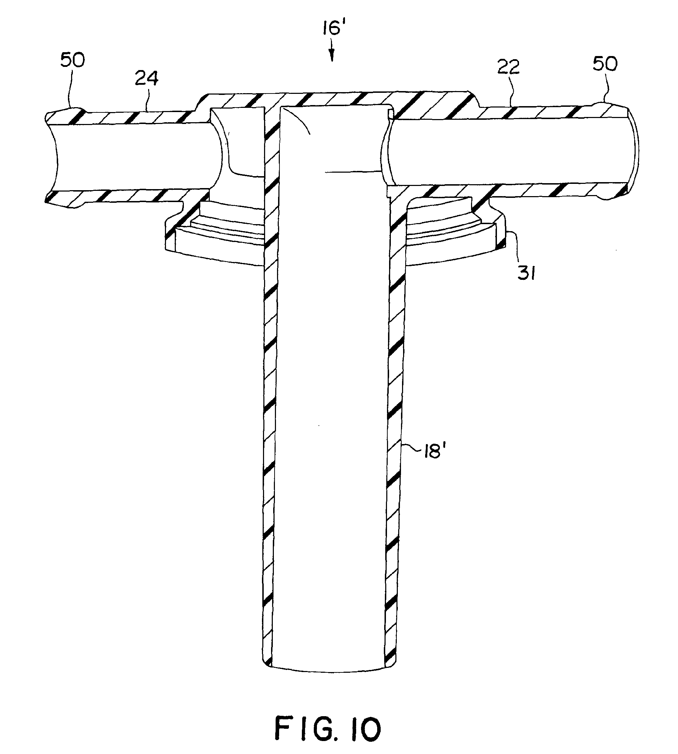

As illustrated in Figures 8 - 10, an alternative preferred embodiment of the base module 10' is assembled from only two molded components: a body 36' and a communication module 16'. The body 36' surrounds a central opening and includes a cylindrical wall defining a receptacle for receiving a filter cartridge 12. An integrally molded outlet conduit 20' projects axially into the receptacle. An annular lip 27 surrounds the central opening and projects axially away from the receptacle. The body 36' cylindrical wall terminates in a retaining lip 40 which engages a roll seam 42 of the filter cartridge 12 retaining the cartridge in mating position with the base module 10'.

The communication module 16' is preferably a one-piece molded unit including inlet 22 and outlet 24 fittings. An inlet conduit 18' projects into the receptacle and an annular skirt 31 projects toward the receptacle. The communication module skirt 31 is configured to surround and mate closely with the annular lip 27 molded into the body 36'. A preferred embodiment of the base module 10' includes a sealing grommet 33 positioned between the annular lip 27 and the skirt 31 to aid in fluidly sealing the assembled base module 10'.

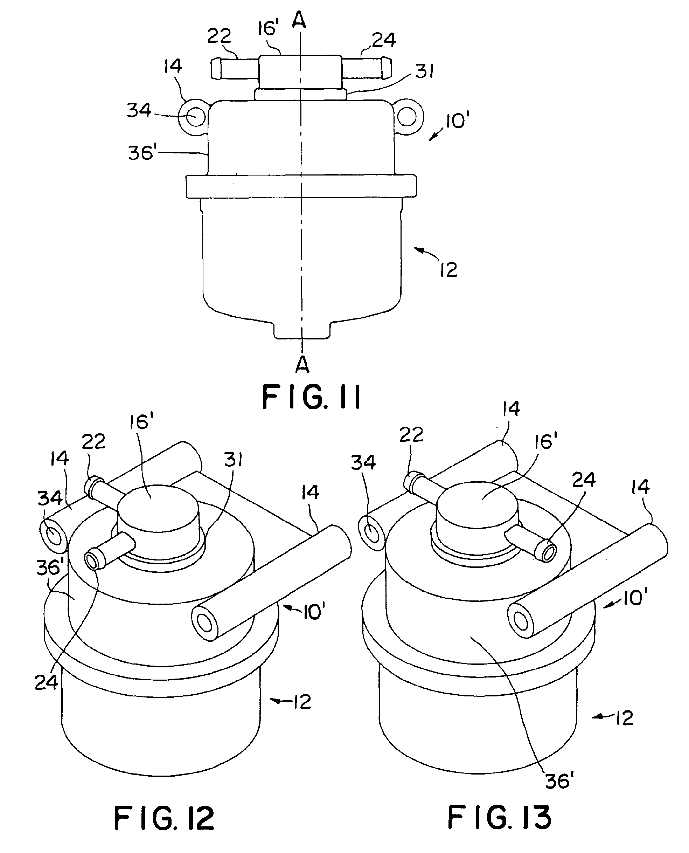

The axes B and C of the integrally molded inlet 22 and outlet 24 fittings, respectively, are typically oriented perpendicular to the base module 10' central axis A. The illustrated embodiment 10' shows inlet 22 and outlet 24 fittings oriented at a 180° angle relative to each other (see Figures 8, 10, 11 and 13). Figure 12 illustrates a filter assembly utilizing a communication module 16' having inlet 22 and outlet 24 fittings molded in a 90° orientation to each other. In addition to the illustrated orientations for the inlet and outlet conduits, a communication module 16' according to the present invention may be molded having inlet and outlet fittings in an infinite variety of angular orientations to the communication module 16' and to each other.

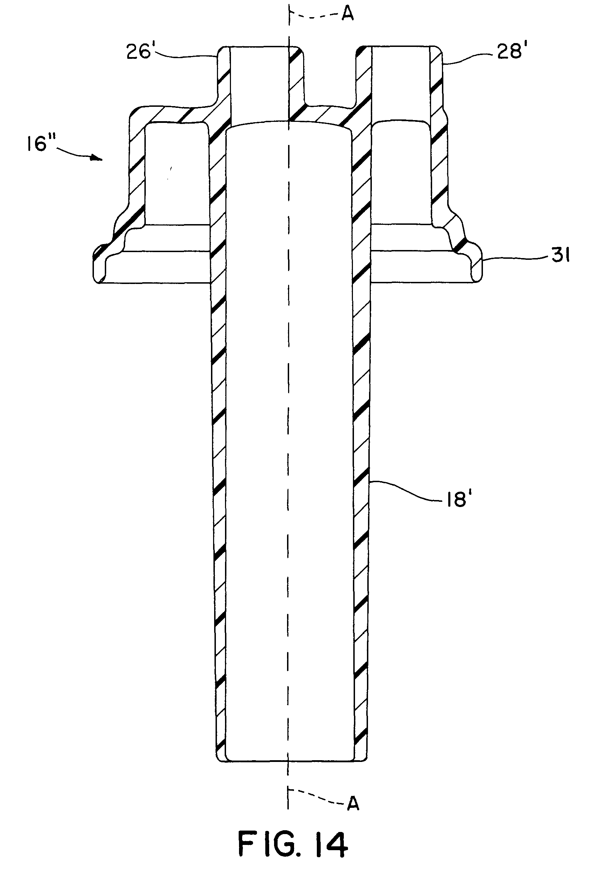

Figure 14 illustrates an alternative configuration for the communication module 16'. In this embodiment the communication module 16" is provided with inlet and outlet connectors 26', 28' projecting axially away from the receptacle. Use of connectors 26', 28' rather than integrally molded fittings gives this embodiment of the communication module 16" the same flexibility of configuration embodied in communication module 16.
Inlet and outlet fittings 22, 24 are mated with corresponding connectors 26', 28' in a variety of angular orientations to each other and to the communication module 16".

When the communication module 16', 16" is received in the central opening of the body 36, 36', the inlet conduit 18' of the communication module has a coaxial relationship to the outlet conduit 20', with the inlet conduit 18' projecting further into the receptacle than the outlet conduit 20'.

In a preferred configuration, the inlet conduit 18, 18' projects a greater distance into the receptacle defined by the body 36, 36' than the outlet conduit 20, 20'. According to this configuration, fuel (or any liquid being filtered) is supplied centrally into the filter cartridge 12 via the inlet conduit 18, 18' and flows generally axially and radially outwardly. The flow path returns through the filter element (not illustrated) radially from the outer to the central interior of the filter cartridge where it continues generally axially through the coaxial outlet conduit 20, 20'. Alternative flow paths are also possible.

One or more integrally molded brackets 14 are preferably included in the body 36, 36'. The brackets 14 may receive a sleeve 52 defining an opening or bore 34 for receiving a fastener (not illustrated) to facilitate mounting of the base module to the vehicle. It should be appreciated that other mounting and bracket configurations may be suitably employed.

The separate initial construction of the communication module 16, 16', 16" and the body 36, 36' allow assembly of a base module 10 in a variety of configurations which can be determined in the later stages of manufacture. The communication module 16, 16', 16" may be angularly oriented relative to the body 36, 36' in an infinite number of positions. The inlet 26, 26' and outlet 28, 28' connectors of the communication module 16, 16" or the inlet 22 and outlet 24 fittings of communication module 16' can thus be oriented in various angular relationships to the base module mounting bracket 14. During manufacture, the molded parts are assembled in the desired angular relationship and ultrasonically welded or otherwise joined to form a rigid structure now fixed in the desired angular orientation.

A similar process may be used to configure the angular relationship of the inlet 22 and outlet 24 fittings to the inlet 26, 26' and outlet 28, 28' connectors that are molded as part of the communication module 16, 16". Each fitting 22, 24 may be placed over its associated connector 26, 26', 28, 28' in a desired angular orientation to the communication module 16, 16" and/or the body 36, 36' and then fixed in that position by means of ultrasonic welding, adhesives or other such joining process.

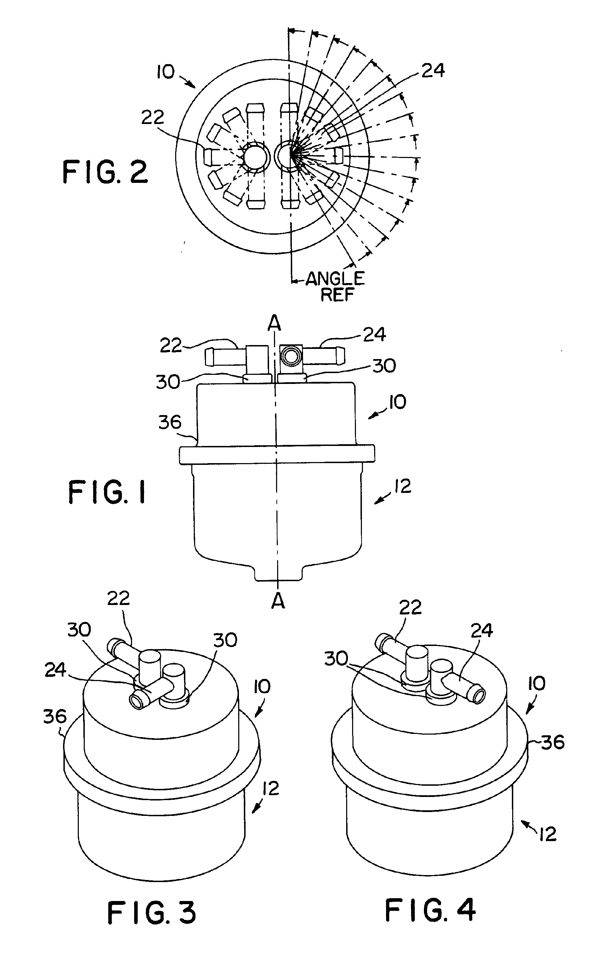

Thus, an infinite number of configurations for a base module 10, 10' can be achieved merely by selecting the orientation of the communication module 16, 16', 16" to the body 36, 36' and/or the orientation of the inlet 22 and outlet 24 fittings to the communication module 16, 16". Infinite configurations can be efficiently achieved using the same set of molded parts without changing the design or manufacturing processes. Figure 2 illustrates possible orientations for the inlet 22 and outlet 24 fittings in relation to the base module 10. Figure 3 illustrates the outlet fitting 24 positioned at a 90° angle relative to the inlet fitting 22. Figure 4 illustrates the outlet fitting 24 positioned at a 180° angle relative to the inlet fitting 22.

Figures 5 and 6 illustrate an annular tongue 48 and complementary groove at the junction of the body 36 with the communication module 16. Figures 8 - 10 illustrate the annular lip 27 projecting from the body 36' and the mating annular skirt 31 projecting from the communication module 16' which form an annular joint which can be sealed with a grommet 33. A variety of such joining structures may be molded into the mating surfaces of the parts of the multiconfigurable filter base module to facilitate their joining, bonding and sealing into an integral structure of sufficient strength and rigidity.

A preferred configuration, illustrated in Figures 5 and 6, shows a filter cartridge 12 (partially illustrated) mounted to a filter base module 10. The mating end 46 of the filter cartridge 12 has a central opening for receiving the inlet 18 and outlet 20 conduits that project axially from the communication module 16. Outlet conduit 20 forms the radially outward surface of the inlet/outlet coaxial conduit projection. The central opening in the mating end 46 of the filter cartridge 12 contains a sealing grommet 44 which engages the outer surface of outlet conduit 20 forming a fluid tight seal. The roll seam structure 42 on the fuel filter cartridge mates with a lip 40 formed on the base module body 36. The lip bears on the roll seam structure 42 and retains the filter in stable position with the base module 10, compressing the sealing grommet 44 against both the radially projecting surface of the communication module 16 and the outer surface of outlet conduit 20.

Fluid enters the filter assembly through inlet fitting 22, passes through inlet connector 26 and into the inlet conduit 18. Inlet conduit 18 extends into the filter cartridge a greater distance than that of outlet conduit 20. Fluid leaves the inlet conduit 18 entering the filter cartridge 12 and flows radially through the filter element (not illustrated), returning to outlet conduit 20 where it flows axially through outlet connector 28 and outlet fitting 24.

Figures 5 and 6 further illustrate which brackets 14 typically have openings 34 for receiving fasteners (not illustrated). Openings 34 may be lined with metal sleeves or bushings 52 to enhance the structural integrity of the brackets and their fastening to the engine compartment.

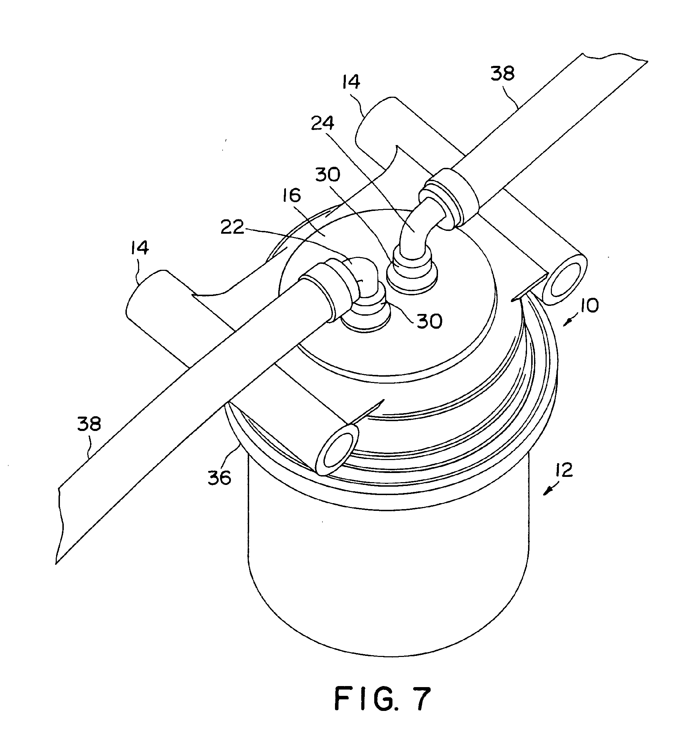

Figure 7 illustrates an alternative embodiment where the mounting brackets 14 project away from the body 36 and include molded extensions thereby providing an alternative mounting configuration. The modular design of the base module 10, 10' lends itself to modification of few or even one component, for example, the body 36, 36', while concurrently using the other unmodified components to construct a specified module. It will be appreciated that such flexibility reduces the cost of adapting the base module 10, 10' of the present invention to a wide range of applications and configurations.

Alternative embodiments of a base module 10, 10' may also be provided with hand primers and/or heating elements (not illustrated). Either of these well-established accessories may be molded into the base module 10, 10'.

It will thus be seen that the present invention, at least in its preferred form provides a new and improved filter base module for a fuel filter system and a new and improved manufacturing method therefor and furthermore; provides a new and improved filter base module that can be efficiently and cost effectively constructed with multiple possible inlet and outlet configurations and furthermore; provides a new and improved filter base module which has a substantially molded construction and can be manufactured in an efficient low cost manner to accommodate various headroom constraints and furthermore; provides a new and improved filter base module which may be efficiently and cost effectively configured for various applications using one set of molded components.

While preferred embodiments of the foregoing invention have been set forth for purposes of illustration, the foregoing description should not be deemed a limitation of the invention therein. Accordingly, various modifications, adaptations and alternatives may occur to one skilled in the art without departing from the scope of the present invention.

## Claims

1. A base module (10, 10') for a filter assembly including a body (36, 36') defining a receptacle for receiving a filter cartridge (12) and including a retaining lip (40) which engages a roll seam structure (42) on the filter cartridge to retain the cartridge in mated position with the base module, at least one mounting bracket (14) extending from said body (36, 36') for mounting said base module (10, 10') to a vehicle, said base module further providing fluid passageways for delivering fluid to the filter cartridge and transmitting filtered fluid from the filter assembly, characterized in that:
the body (36, 36') includes a central axial opening and fluid passageways for transmitting fluid to and from the base module are provided on a separately molded communication module (16, 16', 16") including an inlet conduit (18, 18') extending into said receptacle,
wherein said communication module (16, 16', 16") is receivable in said opening at a plurality of angular orientations to said body and fixable to said body (36, 36').

2. A base module as claimed in claim 1, wherein said body (36, 36') and said communication module (16, 16', 16") are molded plastic parts.

3. A base module as claimed in claim 2, wherein said plastic is glass filled nylon.

4. A base module as claimed in claim 1, 2 or 3, wherein the body (36') includes an outlet conduit (20') projecting into the receptacle and an annular lip (27) surrounding the body central opening and projecting away from the receptacle and the communication module (16") includes an annular skirt (31) configured to mate with the lip (27), an inlet connector (26') in fluid communication with the inlet conduit (18') and an outlet connector (28') configured to be in fluid communication with the outlet conduit (20') when said base module is assembled, said connectors (26', 28') projecting from the exterior of said base module (10').

5. A base module as claimed in claim 4, wherein the inlet and outlet connectors (26', 28') have axes parallel to a central axis (A) of the base module (10') and the base module (10') includes inlet and outlet fittings (22, 24) configured to mate over the inlet and outlet connectors (26', 28'), wherein the fittings have axes that are not parallel to the axis of the base module (10') and each fitting (22, 24) may be fixed over a corresponding connector (26', 28') in an angular orientation selected from a plurality of angular orientations to the connector.

6. A base module as claimed in claim 1, 2 or 3, wherein the body (36') has a central axis and includes an outlet conduit (20') projecting into the receptacle and an annular lip (27) surrounding the body central opening and projecting away from the receptacle and the communication module (16') includes an annular skirt (31) configured to mate with the lip (27), an inlet conduit (18') projecting into the receptacle and an integrally molded inlet fitting (22') in fluid communication with the inlet conduit (18'), an integrally molded outlet fitting (24') configured to be in fluid communication with the outlet conduit (20') when said base module is assembled, said fittings (22', 24') having axes that are not parallel to the body central axis.

7. A base module as claimed in claim 1, 2 or 3, wherein the communication module (16) includes inlet and outlet axial conduits (18, 20) extending axially into said receptacle and corresponding inlet and outlet connectors (26, 28) extending axially away from said receptacle and fluidly communicating with said inlet and outlet conduits, respectively.

8. A base module as claimed in claim 7, further comprising inlet and outlet fittings (22, 24) configured to mate with said inlet and outlet connectors (26, 28) respectively, to define fluid passageways away from said base module, said passageways having axes that are not coaxial with said connectors.

9. A base module as claimed in any preceding claim, wherein said communication module (16, 16') is joined to said body (36, 36') by an ultrasonic weld.

10. A base module as claimed in claim 5 or 8, wherein said fittings (22, 24) are joined to said connectors (26', 28') by an ultrasonic weld.

11. A base module as claimed in claim 6, wherein the axes of said fittings (22', 24') are substantially perpendicular to said body central axis (A).

12. A base module as claimed in claim 11, wherein the axes of said fittings (22', 24') are disposed at angles of between 90° and 180° relative to each other.

13. A method for manufacturing a base module for a filter cartridge, said base module having inlet and outlet fittings (22, 22', 24, 24') defining fluid passageways toward and away from the base module, characterized in that the method includes the following steps:
a) providing a communication module (16, 16', 16") ;
b) providing a body (36, 36') adapted to receive and mate with the communication module (16, 16', 16") in a plurality of angular orientations to said communication module;
c) mating said communication module to said body at an angular orientation selected from said plurality of angular orientations; and
d) joining said communication module to said body.

14. A manufac'turing method as claimed in claim 13, wherein the communication module (16, 16") provided in step a includes an inlet connector (26, 26') and an outlet connector (28, 28') and said method includes the following steps:
e) providing inlet and outlet fittings (22, 24) adapted to mate with a corresponding connector (26, 26', 28, 28') in a plurality of angular orientations to the communication module;
f) mounting the inlet fitting (22) to the inlet connector (26, 26') at an angular orientation selected from said plurality of angular orientations;
g) joining the inlet fitting (22) to the inlet connector (26, 26');
h) mounting the outlet fitting (24) to the outlet connector at an angular orientation selected from said plurality of angular orientations; and
i) joining the outlet fitting (24) to the outlet connector (28, 28').

15. A manufacturing method as claimed in claim 13 or 14, wherein steps d), g) and i) comprise ultrasonic welding.

16. A manufacturing method as claimed in any of claims 13 to 15, further comprising mounting a sealing ring between said body (36, 36') and said communication module (16, 16') and/or between said connectors (26, 26', 28, 28') and said fittings (22, 24).

17. A manufacturing method as claimed in claim 13, wherein the communication module (16') includes integrally molded inlet and outlet fittings (22, 24) having a fixed angular orientation thereto.
